(19) Europäisches Patentamt / European Patent Office / Office européen des brevets

(11) **EP 4 693 464 A2**

(12) **EUROPEAN PATENT APPLICATION**
published in accordance with Art. 153(4) EPC

(43) Date of publication:
**11.02.2026   Bulletin 2026/07**

(21) Application number: **24780963.5**

(22) Date of filing: **03.01.2024**

(51) International Patent Classification (IPC):
*H01M 4/36* (2006.01)   *H01M 4/136* (2010.01)
*H01M 4/1397* (2010.01)   *H01M 4/02* (2006.01)

(52) Cooperative Patent Classification (CPC):
**H01M 4/02; H01M 4/136; H01M 4/1397;**
**H01M 4/36; Y02E 60/10**

(86) International application number:
**PCT/KR2024/000085**

(87) International publication number:
**WO 2024/204968 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **31.03.2023   KR 20230043180**

(71) Applicants:
• **POSCO Holdings Inc.**
  **Pohang-si, Gyeongsangbuk-do 37859 (KR)**

• **Research Institute of Industrial Science &**
  **Technology**
  **Pohang-si, Gyeongsangbuk-do 37673 (KR)**

(72) Inventors:
• **PARK, Jong Il**
  **Pohang-si, Gyeongsangbuk-do 37680 (KR)**
• **NAM, Sang Cheol**
  **Seoul 02587 (KR)**
• **KIM, Junghoon**
  **Incheon 22003 (KR)**

(74) Representative: **Pfenning, Meinig & Partner mbB**
**Patent- und Rechtsanwälte**
**Theresienhöhe 11a**
**80339 München (DE)**

(54) **OLIVINE CATHODE ACTIVE MATERIAL FOR LITHIUM SECONDARY BATTERY AND MANUFACTURING METHOD THEREOF**

(57)   The olivine-type positive electrode active material for a lithium secondary battery according to the present invention comprises: rod-shaped particles having an average length of a long axis in a range from 250 nm to 350 nm and a length of a short axis in a range from 70 nm to 95 nm; and flake-shaped particles having an average length of a long diameter of a broad surface in a range from 350 nm to 450 nm and a length of a short diameter in a range from 200 nm to 250 nm, wherein a percentage of the number of the flake-shaped particles relative to the number of the rod-shaped particles is in a range from 10% to 50%.

[Fig. 1]

## Description

**[Technical Field]**

The present invention relates to an olivine-type positive electrode active material for a lithium secondary battery and a method for preparing the same.

**[Background]**

With the full-scale activation of the electric vehicle market, the market for positive electrode active materials, which account for more than 40% of the cost of lithium-ion batteries, has also been rapidly expanding every year. Automobiles are classified into six segments according to overall vehicle length, with less than 3,500 mm corresponding to segment A and 5,000 mm or more corresponding to segment F. Accordingly, in electric vehicles using batteries, the type of positive electrode active material used varies depending on the grade and the driving range.

For electric vehicles having a driving range of 600 km or more per charge, high energy-density lithium-ion batteries are required, and thus high-nickel NCM-based positive electrode active materials are employed, while for around 400 km driving range, mid-nickel NCM-based materials are used. However, for electric vehicles that do not require a high driving range and that are relatively low in price, it is advantageous in terms of cost to use materials that are not necessarily high in energy density but have high safety and excellent lifespan characteristics.

A lithium iron phosphate (LFP) positive electrode active material has an olivine-type structure consisting of $FeO_6$ octahedral sites and $PO_4$ tetrahedral sites, through which lithium ions are inserted and extracted via a one-dimensional pathway. This material has a major composition of Li, Fe, and P, and thus, compared with NCA or NCM materials that mainly use Ni and Co, it has the advantage of lower raw material costs for metal minerals. Moreover, due to strong P-O bonds, the structure is stable, and oxygen release at high temperatures during charging does not occur, thereby providing excellent thermal stability. In addition, the material exhibits very superior lifespan characteristics, and in China, many electric vehicles have historically been produced using this material.

However, since insertion and extraction of lithium ions occur through one-dimensional diffusion, it is necessary to fabricate primary particles into a nano-sized scale, and due to the intrinsic lack of electronic conductivity of the material, a uniform carbon coating on the surface is essential. Nevertheless, with the recent emphasis on high safety in electric vehicles and the full-scale development of Cell-to-Pack (CTP) and even Cell-to-Chassis (CTC) technologies, the energy density gap compared to conventional NCM-based materials has been increasingly narrowing.

Known methods for preparing the above lithium iron phosphate positive electrode active material include solid-state methods, hydrothermal synthesis, and supercritical fluid methods as liquid-phase methods, and more recently, glycothermal methods have been developed using nonreactive solvents such as ethylene glycol or diethylene glycol as the reaction solvent. In the case of hydrothermal and supercritical methods, when preparing lithium iron phosphate nanopowders, the reactions proceed under high-temperature and high-pressure conditions, which raises safety concerns. Meanwhile, nanopowders prepared by the glycothermal method have problems in controlling particle size and particle size distribution.

Accordingly, there is a need for development of a method capable of manufacturing a lithium iron phosphate (LFP) positive electrode active material with excellent energy density and electrochemical performance in an economical and efficient manner without process-related issues.

**[Detailed Description of the Invention]**

**[Technical Problem]**

The present invention aims to provide an olivine-type positive electrode active material for a lithium secondary battery with improved energy density.

In addition, the present invention aims to provide a method for preparing an olivine-type positive electrode active material for a lithium secondary battery with improved energy density.

**[Technical Solution]**

According to one embodiment of the present invention, an olivine-type positive electrode active material for a lithium secondary battery may comprise: rod-shaped particles having an average length of a long axis in a range from 250 nm to 350 nm and an average length of a short axis in a range from 70 nm to 100 nm; and flake-shaped particles having an average long diameter of a broad surface in a range from 200 nm to 450 nm and an average short diameter in a range from 100 nm to 250 nm.

The rod-shaped particles may have rounded ends in the longitudinal direction of the long axis, and the flake-shaped particles may have a shape in which the length of the short diameter gradually decreases from the center of the long diameter toward both ends thereof.

A percentage of the number of the flake-shaped particles relative to the total number of the rod-shaped particles and the flake-shaped particles may be in a range from 1% to 50%.

A ratio of the length of the long axis to the length of the short axis of the rod-shaped particles may be in a range from 1.5 to 8.0, and an aspect ratio of the broad surface of the flake-shaped particles may be in a range from 1.0 to 3.0.

The chemical composition of the rod-shaped particles and the flake-shaped particles may be represented by the following Chemical Formula 1:

$$[\text{Chemical Formula 1}] \qquad Li_x(Fe_\gamma M_{1-\gamma})PO_4$$

where $0.99 \leq x \leq 1.03$, $0.2 \leq y \leq 0.6$, and M is one or more selected from Mn, Co, Ni, Cu, Zn, Mg, Cr, V, Mo, Ti, Al, Nb, B, W, or Ga.

A specific surface area of the olivine-type positive electrode active material for a lithium secondary battery may be in a range from 10 $m^2$/g to 30 $m^2$/g.

The olivine-type positive electrode active material for a lithium secondary battery may include a carbon coating layer located on an external surface thereof, and a mass percentage of carbon relative to the total mass of the olivine-type positive electrode active material may be in a range from 1 wt% to 2 wt%.

In addition, the carbon coating layer may cover from 90% to 100% of a total surface area of the olivine-type positive electrode active material.

According to another embodiment of the present invention, a method for preparing an olivine-type positive electrode active material for a lithium secondary battery may comprise: preparing a first reaction solution by dissolving an iron raw material, a phosphorus raw material, and a doping raw material in water, preparing a second reaction solution by dissolving a lithium raw material in water, and preparing an organic solvent in which a dispersant is dissolved; introducing the first reaction solution and the second reaction solution into a reactor containing the organic solvent dissolved with the dispersant, while stirring, to obtain an organic solution; heating the reactor to maintain an internal temperature in a range from 160°C to 180°C, and performing a reaction under atmospheric pressure without sealing the reactor to obtain a precipitate; and separating and drying the precipitate, followed by calcining under a reducing atmosphere to obtain an olivine-type positive electrode active material.

The step of heating the reactor to maintain an internal temperature in a range from 160°C to 180°C and performing a reaction under atmospheric pressure without sealing the reactor to obtain a precipitate may be performed through a reflux process.

In the step of preparing the organic solvent in which the dispersant is dissolved, the organic solvent may have a boiling point in a range from 150°C to 200°C.

The organic solvent may be one or more selected from dimethyl sulfoxide (DMSO), diglyme, triglyme, and dimethylformamide (DMF).

The dispersant may be one or more selected from polyvinylpyrrolidone (PVP), polyvinylphenol (PVPh), polyvinyl alcohol (PVA), polyvinylsulfonic acid, polyvinyl sulfate metal salts, polyvinyl carboxylic acids, polyvinyl carboxylate metal salts, polyvinylpyridine (PVPy), copolymers thereof, cyclodextrin, dextran, polysaccharides, and polyacrylic acid (PAA).

The step of preparing the organic solvent in which the dispersant is dissolved may comprise stirring the organic solvent and the dispersant introduced into the reactor to dissolve the dispersant, and heating the organic solvent dissolved with the dispersant to a temperature in a range from 50°C to 80°C.

The step of heating the organic solvent dissolved with the dispersant to a temperature in a range from 50°C to 80°C may be performed while continuously introducing an inert gas into the reactor.

A mass percentage of the dispersant relative to the mass of the organic solvent may be in a range from 0.2 wt% to 2 wt%.

In the step of introducing the first reaction solution and the second reaction solution into the reactor containing the organic solvent dissolved with the dispersant while stirring to obtain the organic solution, a molar ratio value of lithium element to a total molar number of the iron element and the doping element in the obtained organic solution may be in a range from 1.00 to 1.02.

The step of introducing the first reaction solution and the second reaction solution into the reactor containing the organic solvent dissolved with the dispersant while stirring to obtain the organic solution may be performed by introducing the first reaction solution and the second reaction solution into the reactor at predetermined rates so that a pH value of the organic solution in the reactor is maintained constant, specifically in a range from 6.0 to 7.0.

The step of heating the reactor to a temperature in a range from 160°C to 180°C and performing a reflux reaction under atmospheric pressure without sealing the reactor to obtain a precipitate may be performed for a period of 3 hours to 24 hours.

In the step of separating and drying the precipitate and then calcining under a reducing atmosphere to obtain the olivine-type positive electrode active material, the method may further comprise mixing and milling the dried precipitate with a carbon coating raw material to obtain a mixture, and performing calcination of the obtained mixture under the reducing atmosphere.

In the step of mixing and milling the dried precipitate with the carbon coating raw material to obtain the mixture, a mass percentage of the carbon coating raw material relative to the mass of the dried precipitate may be in a range from 5 wt% to 15 wt%.

The step of separating and drying the precipitate and then calcining under a reducing atmosphere to obtain the olivine-type positive electrode active material may be performed by calcination at a temperature in a range from 400°C to 700°C for 1 hour or longer under the reducing atmosphere.

In the step of preparing the first reaction solution by dissolving the iron raw material, the phosphorus raw material, and the doping raw material in water, the doping raw material may comprise one or more selected from Mn, Co, Ni, Cu, Zn, Mg, Cr, V, Mo, Ti, Al, Nb, B, W, or Ga.

**[Advantageous Effects]**

The olivine-type positive electrode active material for a lithium secondary battery according to the present invention has the advantage of exhibiting excellent electrical conductivity while maintaining high energy density.

In addition, the method for preparing the olivine-type positive electrode active material for a lithium secondary battery according to the present invention has the advantage of enabling the preparation of an olivine-type positive electrode active material with excellent electrical conductivity and high energy density.

**[Brief Description of Drawings]**

FIG. 1 is an SME analysis image of LFMP prepared according to Examples 1 to 3.
FIG. 2 is an SME analysis image of LFMP prepared according to Comparative Examples 2 to 4.
FIG. 3 is an XRD analysis result of LFMP prepared according to Examples 2 and 3.
FIG. 4 is an XRD analysis result of LFMP prepared according to Example 2 and Comparative Example 4.
FIG. 5 is an XRD analysis result of LFMP prepared according to Comparative Example 2.

**[Best Mode for Carrying Out the Invention]**

Hereinafter, embodiments of the present invention will be described in detail. However, these are presented merely as examples, and the present invention is not limited thereto, but is defined only by the scope of the claims described below.

In the present invention, when a component is described as being "on" another component, this includes not only cases where the component is in direct contact with the other component, but also cases where another component is interposed between the two components.

In the present invention, when a portion is described as "comprising" a constituent element, unless otherwise explicitly stated, it does not exclude the presence of other constituent elements, but may further include other constituent elements.

**<Olivine-Type Positive Electrode Active Material for Lithium Secondary Battery>**

One embodiment of the present invention relates to an olivine-type positive electrode active material represented by the following Chemical Formula 1:

**[Chemical Formula 1]** $\quad Li_x(Fe_\gamma M_{1-\gamma})PO_4$

In Chemical Formula 1,

$$0.99 \leq x \leq 1.03,$$

$$0.2 \leq y \leq 0.6,$$

and

M is one or more selected from Mn, Co, Ni, Cu, Zn, Mg, Cr, V, Mo, Ti, Al, Nb, B, W, or Ga.

The olivine-type positive electrode active material for a lithium secondary battery according to the present invention may comprise particles having one or more shapes selected from rod-shaped and flake-shaped.

The rod-shaped particles may have an average length of a long axis in a range from 150 nm to 500 nm, and specifically from 250 nm to 350 nm. In addition, the rod-shaped particles may have an average length of a short axis in a range from 60 nm to 120 nm, and specifically from 70 nm to 100 nm.

In this context, the length of the long axis of the rod-shaped particle refers to the length of the longer side in the longitudinal direction of one rod-shaped particle, and the length of the short axis refers to the length of the longer side in the width direction perpendicular to the long axis. A ratio of the length of the long axis to the length of the short axis of the rod-shaped particles may be in a range from 1.5 to 8.0.

The rod-shaped particles may have rounded ends in the longitudinal direction of the long axis.

The flake-shaped particles may have an average long diameter of a broad surface in a range from 200 nm to 650 nm, and specifically from 350 nm to 450 nm. The flake-shaped particles may have an average short diameter of a broad surface in a range from 150 nm to 350 nm, and specifically from 200 nm to 250 nm. Meanwhile, the aspect ratio of the flake-shaped particles may be in a range from 1.0 to 3.0.

In addition, the flake-shaped particles may have a shape in which the length of the short diameter gradually decreases from the center of the long diameter toward both ends thereof.

A percentage of the number of the flake-shaped particles relative to the total number of the rod-shaped particles and the flake-shaped particles may be in a range from 1% to 50%, specifically from 1% to 30%, and more specifically from 1% to 10%.

When the rod-shaped particles and the flake-shaped particles within the above size ranges are mixed in the above quantitative ranges, there is an advantage in that the energy density and the capacity of a battery employing the same are improved.

The olivine-type positive electrode active material for a lithium secondary battery according to the present invention may have a specific surface area in a range from 10 $m^2$/g to 30 $m^2$/g.

The specific surface area was measured by a nitrogen adsorption method according to Brunauer-Emmett-Teller (BET) analysis, wherein nitrogen gas is adsorbed and desorbed on the surface of a solid sample, and the amount of adsorption at partial pressures is measured to determine the specific surface area using the BET equation.

In addition, the olivine-type positive electrode active material for a lithium secondary battery according to the present invention may include a carbon coating layer located on an external surface thereof, and the carbon coating layer may be located on 90% to 100% of the total surface area of the particles of the olivine-type positive electrode active material. A mass percentage of carbon relative to the total mass of the olivine-type positive electrode active material may be in a range from 1 wt% to 2 wt%.

When the carbon coating layer is within the above range, it is possible to suppress a phenomenon in which volumetric energy density decreases due to excessive carbon coating, while maintaining excellent electrical conductivity. In addition, controlling the carbon content within this range is advantageous in preventing delamination from the current collector during electrode plate fabrication.

**<Method for Preparing an Olivine-Type Positive Electrode Active Material for a Lithium Secondary Battery>**

Another embodiment of the present invention provides a method for preparing an olivine-type positive electrode active material for a lithium secondary battery, comprising:

preparing a first reaction solution by dissolving an iron raw material, a phosphorus raw material, and a doping raw material in water, preparing a second reaction solution by dissolving a lithium raw material in water, and preparing an organic solvent in which a dispersant is dissolved;

introducing the first reaction solution and the second reaction solution into a reactor containing the organic solvent dissolved with the dispersant, while stirring, to obtain an organic solution;

heating the reactor to a temperature in a range from 160°C to 180°C and performing a reflux reaction under atmospheric pressure without sealing the reactor to obtain a precipitate; and separating and drying the precipitate, followed by calcining under a reducing atmosphere to obtain the olivine-type positive electrode active material.

The method for preparing an olivine-type positive electrode active material for a lithium secondary battery of the present invention comprises a step of preparing the first reaction solution by dissolving an iron raw material, a phosphorus raw material, and a doping raw material in water, a second reaction solution by dissolving a lithium raw material in water, and an organic solvent in which a dispersant is dissolved.

The first reaction solution may be obtained by introducing the iron raw material, the phosphorus raw material, and the doping raw material into water and dissolving them with stirring. The iron raw material may be one or more selected from $FeCl_2 \cdot 4H_2O$, $FeSO_4 \cdot 7H_2O$, and $Fe(NO_3)_2 \cdot 6H_2O$, and specifically may be $FeSO_4 \cdot 7H_2O$.

The phosphorus raw material may be one or more selected from $H_3PO_4$, $NH_4H_2PO_4$, $(NH_4)_2HPO_4$, $NaH_2PO_4$, $Na_2HPO_4$, $LiH_2PO_4$, and $Li_2HPO_4$.

The doping raw material may comprise one or more selected from Mn, Co, Ni, Cu, Zn, Mg, Cr, V, Mo, Ti, Al, Nb, B, W, or Ga.

The second reaction solution may be obtained by introducing a lithium raw material into water and dissolving it with stirring. The lithium raw material may be LiOH, $Li_2CO_3$, $LiH_2PO_4$, $Li_2HPO_4$, or $Li_3PO_4$, but is not limited thereto.

In the step of preparing the organic solvent in which the dispersant is dissolved, the organic solvent may be one having a boiling point in a range from 150°C to 200°C. Specifically, the organic solvent may be one or more selected from dimethyl sulfoxide (DMSO), diglyme, triglyme, and dimethylformamide (DMF), and more specifically, dimethyl sulfoxide (DMSO).

The dispersant may be a polymer dispersant, and specifically may be one or more selected from polyvinylphenol (PVPh), polyvinylpyrrolidone (PVP), polyvinyl alcohol (PVA), polyvinylsulfonic acid, polyvinyl sulfate metal salts, polyvinyl carboxylic acids, polyvinyl carboxylate metal salts, polyvinylpyridine (PVPy), copolymers thereof, cyclodextrin, dextran, polysaccharides, and polyacrylic acid (PAA).

A mass percentage of the dispersant relative to the mass of the organic solvent may be in a range from 0.2 wt% to 2 wt%.

When the dispersant is mixed with the organic solvent in the above range, particle morphology and particle size can be controlled, whereby the olivine-type positive electrode active material having improved energy density can be efficiently produced, and particle agglomeration or formation of by-products during the reaction process can be prevented.

The method for preparing an olivine-type positive electrode active material for a lithium secondary battery of the present invention further comprises introducing the first reaction solution and the second reaction solution into the reactor containing the organic solvent dissolved with the dispersant, while stirring, to obtain the organic solution.

After introducing the dispersant into the reactor containing the organic solvent, the mixture may be dissolved by stirring at room temperature, and then the reactor may be heated so that the internal material reaches 80°C, specifically in a range from 50°C to 80°C. This is advantageous in that, when the first and second reaction solutions are introduced, the co-precipitation reaction of Li(Fe, Mn)$PO_4$ in the reactor can be carried out uniformly.

When heating the reactor, an inert gas may be continuously supplied so that the interior of the reactor is maintained under an inert atmosphere. This is preferable because it prevents oxidation by active components such as oxygen during the heating process, thereby preventing the generation of by-products.

The prepared first reaction solution, in which the iron raw material, the phosphorus raw material, and the doping raw material are dissolved in water, may be introduced into the reactor containing the heated organic solvent dissolved with the dispersant at a predetermined feed rate, while the reactor is continuously stirred by a separate stirring member or stirring device.

At the same time, the second reaction solution, in which the lithium raw material is dissolved in water, may be introduced at a predetermined feed rate.

At this time, the pH value of the material inside the reactor may be maintained constant, specifically in a range from 6.0 to 7.0. Maintaining the pH value within this range is advantageous because particle morphology and size can be controlled, thereby enabling efficient production of an olivine-type positive electrode active material having improved energy density.

A molar ratio value of lithium element to the total molar number of the iron element and the doping element in the obtained organic solution may be in a range from 1.00 to 1.02, and specifically from 1.00 to 1.01.

When the molar ratio value of lithium element to the total molar number of the iron element and the doping element in the organic solution is within the above range, it is advantageous because an olivine-type positive electrode active material with fewer impurities can be manufactured.

The method for preparing an olivine-type positive electrode active material for a lithium secondary battery of the present invention comprises a step of obtaining a precipitate by performing a reaction while heating the reactor to maintain an internal temperature in a range from 160°C to 180°C under atmospheric pressure without sealing the reactor.

After the first reaction solution and the second reaction solution are completely introduced into the reactor containing the organic solvent in which the dispersant is dissolved, the reactor may be heated such that the internal temperature of the material accommodated in the reactor is maintained in a range from 160°C to 180°C, and then, while maintaining the temperature, the reaction may be performed under atmospheric pressure without sealing the reactor for 3 hours or longer, specifically for 3 hours to 24 hours, to obtain a precipitate. At this time, a Dean-Stark apparatus may be connected to the reactor and a reflux condenser may be installed above, thereby performing a reflux process.

After the reaction for obtaining the precipitate is completed, the precipitate may be separated through centrifugation or filter pressing, and the separated precipitate may be washed two or more times with distilled water. By the washing performed two or more times, impurities such as residual organic solvent and dispersant remaining in the precipitate can be removed.

The washed precipitate may be dried in a drying apparatus, and an inert gas may be continuously supplied into the drying apparatus.

The dried precipitate may then be introduced into a calcination furnace and calcined at a temperature in a range from 550°C to 750°C for 12 hours or longer while continuously supplying a reducing gas, thereby obtaining an olivine-type positive electrode active material coated with carbon.

In another embodiment of the present invention, the method may further comprise a process of pulverizing the lithium iron phosphate compound, but is not limited thereto.

In another embodiment of the present invention, the dried precipitate may be mixed and milled with a carbon coating raw material and then subjected to reduction calcination to obtain an olivine-type positive electrode active material coated with carbon. A mass percentage of the carbon coating raw material relative to the mass of the dried precipitate may be in a range from 5 wt% to 15 wt%. When the carbon coating raw material is mixed within the above range, an olivine-type positive electrode active material having a controlled carbon content, as intended in the present invention, can be advantageously manufactured.

The carbon coating raw material may be one or more selected from cellulose, glucose, sucrose, fructose, lactose, or maltose, and as long as a carbon coating layer can be effectively formed by the method of the present invention, the type of carbon coating raw material is not particularly limited. Specifically, the carbon coating raw material may be cellulose.

The carbon-coated olivine-type positive electrode active material obtained through the above process has been specifically described above, and thus detailed description thereof will be omitted here.

Hereinafter, preferred Examples and Comparative Examples of the present invention will be described. However, the following Examples are merely preferred embodiments of the present invention, and the present invention is not limited thereto.

**[Mode for Carrying Out the Invention]**

**(Preparation of Olivine-Type Positive Electrode Active Material)**

3.371 g of $FeSO_4 \cdot 7H_2O$, 8.196 g of $MnSO_4 \cdot H_2O$, and 6.9714 g of 85% $H_3PO_4$ were introduced into 200 g of distilled water ($H_2O$), followed by stirring to prepare a first reaction solution.

Separately, 7.6297 g of $LiOH \cdot H_2O$ was introduced into 200 g of distilled water ($H_2O$), followed by stirring and dissolving to prepare a second reaction solution, which was a basic lithium solution.

In a co-precipitation reactor equipped with a condenser, 200 g of DMSO and 1 g of polyvinylpyrrolidone (PVP, dispersant) were dissolved to prepare an organic solution. Argon gas was purged, and while stirring the internal solution of the reactor, the reactor was heated until the solution temperature reached 80°C.

The first reaction solution was introduced into the heated co-precipitation reactor at a constant rate, and simultaneously, the second reaction solution was introduced while adjusting the feed rate so that the pH was maintained at approximately 6.5.

After the introduction of the first reaction solution and the second reaction solution was completed, the reactor was heated until the temperature of the mixture contained therein reached 160°C, and while maintaining the temperature at 160°C, a reflux reaction was carried out for a predetermined period of time.

After the completion of the reaction, the obtained precipitate was separated through centrifugation or filter pressing, washed twice with water, and then dried in a drying oven. To the dried powder, 10 wt% cellulose, based on the mass of the dried powder, was added, followed by dry mixing and milling using a mixer. Thereafter, the mixture was introduced into a calcination furnace at 650°C and calcined for 1 hour under a nitrogen gas atmosphere to finally prepare a carbon-coated LFMP, which is an olivine-type positive electrode active material for a lithium secondary battery.

The amounts of raw materials used in Examples 1 to 3 and Comparative Examples 1 to 4 according to the above preparation method are shown in Table 1 below, and the operating conditions are shown in Table 2 below.

[Table 1]

| | The first reaction solution | | | | The second reaction solution | | Organic solvent | |
|---|---|---|---|---|---|---|---|---|
| | $FeSO_4\text{-}7H_2O$ | $MnSO_4\text{-}H_2O$ | 85% $H_3PO_4$ | $H_2O$ | LiOH | $H_2O$ | PVP | DMSO |
| | (g) | (g) | (g) | (g) | (g) | (g) | (g) | (g) |
| Example 1 | 3.37 | 8.2 | 6.97 | 200 | 7.63 | 200 | 1 | 300 |
| Example 2 | 3.37 | 8.2 | 6.97 | 200 | 7.63 | 200 | 1 | 300 |

(continued)

| | The first reaction solution | | | | The second reaction solution | | Organic solvent | |
|---|---|---|---|---|---|---|---|---|
| | FeSO$_4$-7H$_2$O | MnSO$_4$-H$_2$O | 85% H$_3$PO$_4$ | H$_2$O | LiOH | H$_2$O | PVP | DMSO |
| | (g) | (g) | (g) | (g) | (g) | (g) | (g) | (g) |
| Example 3 | 3.37 | 8.2 | 6.97 | 200 | 7.63 | 200 | 1 | 300 |
| Compara tive example 1 | 3.37 | 8.2 | 6.97 | 200 | 7.63 | 200 | 1 | 300 |
| Compara tive example 2 | 3.37 | 8.2 | 6.97 | 200 | 7.63 | 200 | 0 | 200 (DEG) |
| Compara tive example 3 | 3.37 | 8.2 | 6.97 | 200 | 7.63 | 200 | 1 | 300 |
| Compara tive example 4 | 3.38 | 8.2 | 6.97 | 200 | 7.88 | 200 | 1 | 300 |

In Comparative Example 2 of Table 1, diethylene glycol (DEG) was used in place of DMSO. Meanwhile, in Comparative Example 2, experiments were conducted in which the reaction time was maintained at 3 hours, 6 hours, 9 hours, 15 hours, and 30 hours instead of 24 hours.

[Table 2]

| | Introducing the first reaction solution and the second reaction solution into the organic solution | | Reflux reaction | | |
|---|---|---|---|---|---|
| | Maintaining pH | Input time | Final pH | Reflux Temp. | Reflux Time |
| | | (hr) | (hr) | (°C) | (hr) |
| Example 1 | 7 | 2 | 6.71 | 160 | 3 |
| Example 2 | 6 | 2 | 6.85 | 180 | 3 |
| Example 3 | 6 | 2 | 6.75 | 180 | 24 |
| Comparative example 1 | 6 | 2 | 6.8 | 150 | 3 |
| Comparative example 2 | 8 | 2 | 6.85 | 180 | 24 |
| Comparative example 3 | 5 | 2 | 6.85 | 180 | 3 |
| Comparative example 4 | 8 | 2 | 8.18 | 180 | 3 |

**(SEM Analysis)**

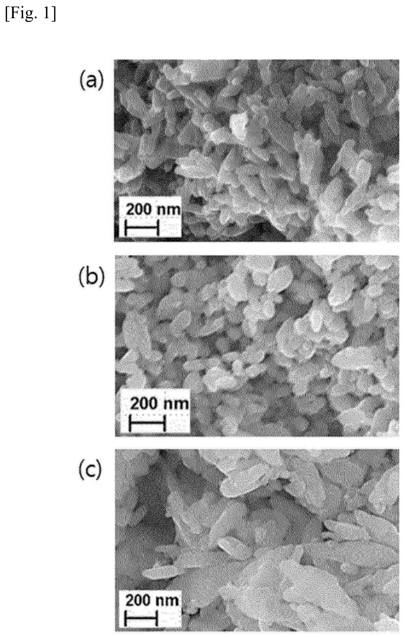

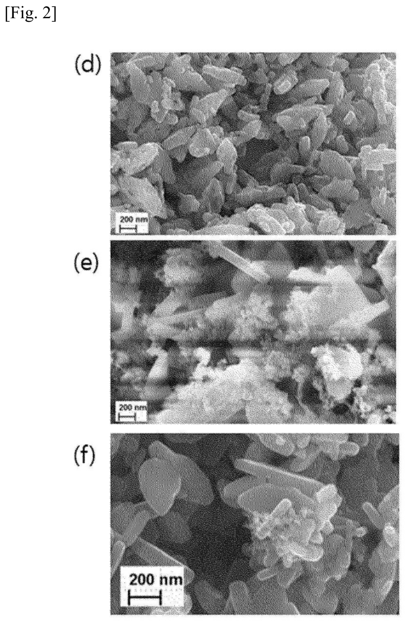

FIG. 1 shows SEM analysis images of LFMP prepared according to Examples 1 to 3, and FIG. 2 shows SEM analysis images of LFMP prepared according to Comparative Examples 2 to 4.

Referring to FIG. 1, it can be confirmed that the LFMP prepared according to Examples 1 to 3 comprises rod-shaped particles having an average length of a long axis in a range from 250 nm to 350 nm and an average length of a short axis in a range from 70 nm to 100 nm, and flake-shaped particles having an average long diameter of a broad surface in a range from 350 nm to 450 nm and an average short diameter in a range from 200 nm to 250 nm, which are formed as individual entities. In addition, it can be confirmed that the percentage of the number of the flake-shaped particles relative to the total number of the rod-shaped particles and the flake-shaped particles is 50% or less.

In contrast, referring to FIG. 2, it was found that the LFMP prepared according to Comparative Examples 2 to 4 exhibited agglomeration of the rod-shaped particles and the flake-shaped particles into a single particle. It can also be confirmed that, in addition to the rod-shaped and flake-shaped particles, fine-powder particles are agglomerated with the rod-shaped and flake-shaped particles.

**(XRD Analysis)**

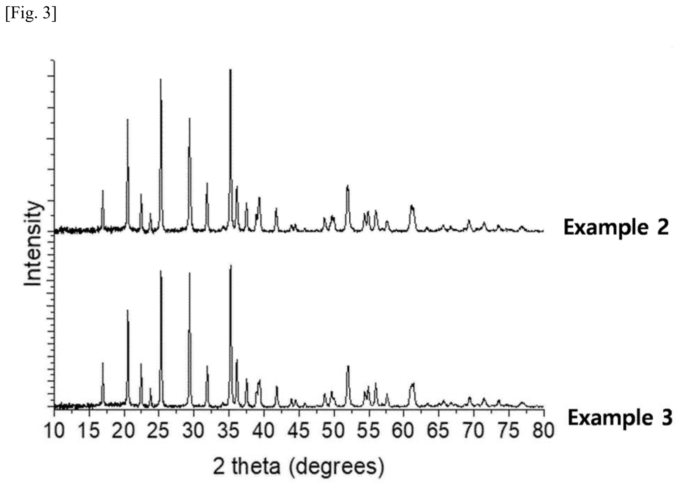

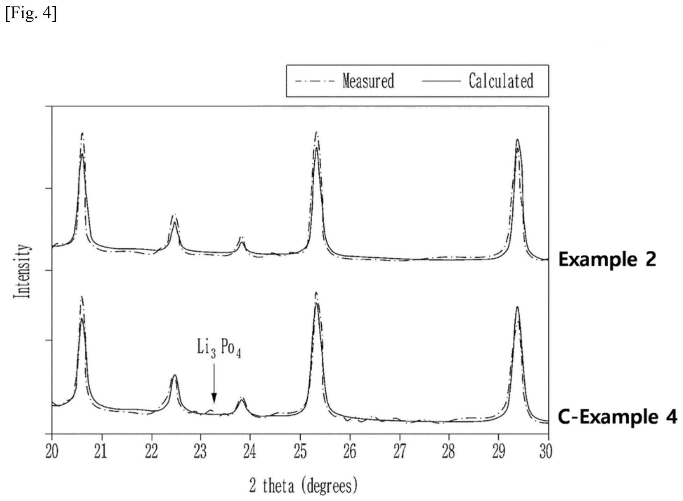

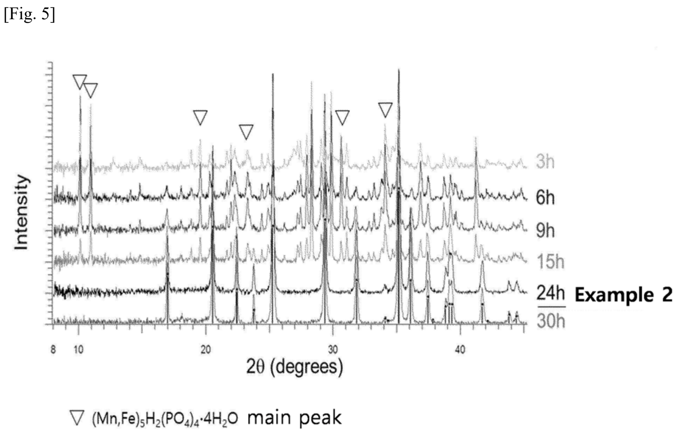

FIG. 3 shows XRD analysis results of LFMP prepared according to Examples 2 and 3, FIG. 4 shows XRD analysis results of LFMP prepared according to Example 2 and Comparative Example 4, and FIG. 5 shows XRD analysis results of LFMP prepared according to Comparative Example 2.

Meanwhile, FIG. 5 additionally shows XRD analysis results of LFMP prepared by the same method as Comparative Example 2 except for different reflux reaction times.

Referring to FIG. 3, it can be confirmed that LFMP prepared according to Example 2, in which the pH was maintained at 6 and the reflux reaction time was 3 hours, and LFMP prepared according to Example 3, in which the reflux reaction time was 3 hours, exhibited almost the same crystal structure.

Referring to FIG. 4, in the case of Comparative Example 4, in which LiOH was introduced at a molar ratio of 1.03 relative to the total molar number of iron and manganese elements, a $Li_3PO_4$ peak caused by excessive Li was confirmed, and impurities were observed. In contrast, in Example 4, in which LiOH was introduced at a molar ratio of 1.00 relative to the total molar number of iron and manganese elements, it was confirmed that almost no impurity was generated.

Referring to FIG. 5, when DEG (diethylene glycol) was used as the organic solvent instead of DMSO, the XRD analysis of LFMP according to the reflux reaction time showed that up to 15 hours of reaction, a $(Mn,Fe)_5H_2(PO_4)_4 \cdot 4H_2O$ phase was generated, and after 24 hours of reaction, conversion to $LiFe_{0.2}Mn_{0.8}PO_4$ occurred. It was confirmed that impurities were generated when the reflux reaction time was less than 24 hours, and that conversion to LFMP occurred after 24 hours of reaction.

**(Fabrication of Coin-Type Half-Cell)**

A CR2032 coin cell was fabricated using the LFP positive electrode active material prepared according to the above Examples and Comparative Examples, and electrochemical evaluation was carried out.

Specifically, the LFP positive electrode active material, a conductive agent (Super P), and a binder (PVDF) were mixed in a weight ratio of 90:5:5 in an NMP (N-methyl-2-pyrrolidone) solvent to adjust slurry viscosity and prepare a slurry for electrode plate fabrication.

The prepared slurry was coated on 15 $\mu$m-thick Al foil using a doctor blade, dried, and rolled to fabricate a positive electrode plate. The electrode loading amount was about 10 mg/cm$^2$ or higher, and the electrode density was about 2 g/cm$^3$ or higher.

As an electrolyte, 1 M $LiPF_6$ in a solvent mixture of EC:DMC:EMC = 3:4:3 (vol%) was prepared, and 1.5 wt% vinylene carbonate (VC) was added. A coin-type half-cell was then fabricated using a PP separator and a lithium negative electrode (200 $\mu$m, Honzo metal), followed by aging at room temperature for 10 hours. The evaluation was conducted within a voltage range of 4.3 V to 2.5 V, with the reference capacity at 1C being 150 mAh/g, and the results are shown in Table 3 below.

[Table 3]

| | Charge Capacity | Discharge Capacity | Efficiency | Charge Capacity | Discharge Capacity | Efficiency | Discharge Capacity at 1C |
|---|---|---|---|---|---|---|---|
| | (mAh/g@0.1 C) | (mAh/g@0.1C) | % | (wh/kg@0.1C) | (wh/kg@0.1C) | % | (wh/kg@0.1C) |
| Example 1 | 146.1 | 141.8 | 97.1% | 550.9 | 550.3 | 99.9% | 342.6 |
| Example 2 | 146.3 | 145.5 | 99.5% | 554.1 | 553.5 | 99.9% | 341.1 |
| Example 3 | 147.6 | 143.8 | 97.4% | 556.1 | 550.9 | 99.1% | 284.1 |
| Comparative example 1 | 123.0 | 123.1 | 100.1% | 476.6 | 468.7 | 98.3% | 330.6 |
| Comparative example 2 | 110.2 | 109.6 | 99.5% | 416.1 | 401.1 | 96.4% | 167 |
| Comparative example 3 | 47.6 | 45.3 | 95.2% | 151.3 | 147.4 | 97.4% | 50.3 |
| Comparative example 4 | 110.9 | 109.8 | 99.0% | 366.3 | 365.1 | 99.7% | 184.9 |
| Comparative example 5 | 120.3 | 118.5 | 98.5% | 385.6 | 380.8 | 98.8% | 194.3 |

Referring to Table 3, it can be confirmed that, in the case of the batteries prepared according to the Examples of the present invention, the charge capacity and discharge capacity are superior compared with those of the batteries prepared according to the Comparative Examples.

The present invention is not limited to the above-described Examples, but may be manufactured in various other forms. It will be understood by those skilled in the art to which the present invention pertains that the invention may be embodied in other specific forms without changing the technical spirit or essential characteristics of the present invention. Therefore, the above-described Examples are to be understood as illustrative in every respect and not restrictive.

**Claims**

1. An olivine-type positive electrode active material for a lithium secondary battery, comprising:

   rod-shaped particles having an average length of a long axis in a range from 250 nm to 350 nm and an average length of a short axis in a range from 70 nm to 100 nm; and
   flake-shaped particles having an average long diameter of a broad surface in a range from 200 nm to 450 nm and an average short diameter in a range from 100 nm to 250 nm,
   wherein the percentage of the number of the flake-shaped particles relative to the total number of the rod-shaped particles and the flake-shaped particles is in a range from 1% to 50%.

2. The olivine-type positive electrode active material for a lithium secondary battery of claim 1, wherein the ratio of the length of the long axis to the length of the short axis of the rod-shaped particles is in a range from 1.5 to 8.0.

3. The olivine-type positive electrode active material for a lithium secondary battery of claim 1, wherein the aspect ratio of the broad surface of the flake-shaped particles is in a range from 1.0 to 3.0.

4. The olivine-type positive electrode active material for a lithium secondary battery of claim 1, wherein the chemical composition of the rod-shaped particles and the flake-shaped particles is represented by the following Chemical Formula 1:

   [Chemical Formula 1]  $Li_x(Fe_\gamma M_{1-\gamma})PO_4$

   where $0.99 \leq x \leq 1.03$, $0.2 \leq y \leq 0.6$, and M is one or more selected from Mn, Co, Ni, Cu, Zn, Mg, Cr, V, Mo, Ti, Al, Nb, B, W, or Ga.

5. The olivine-type positive electrode active material for a lithium secondary battery of claim 1, wherein the specific surface area of the olivine-type positive electrode active material is in a range from 10 $m^2$/g to 30 $m^2$/g.

6. The olivine-type positive electrode active material for a lithium secondary battery of claim 1, further comprising a carbon coating layer located on an external surface thereof.

7. The olivine-type positive electrode active material for a lithium secondary battery of claim 6, wherein a mass percentage of carbon relative to the total mass of the olivine-type positive electrode active material is in a range from 1 wt% to 2 wt%.

8. The olivine-type positive electrode active material for a lithium secondary battery of claim 6, wherein the carbon coating layer covers from 90% to 100% of a total surface area of the olivine-type positive electrode active material.

9. The olivine-type positive electrode active material for a lithium secondary battery of claim 1, wherein the rod-shaped particles have rounded ends in a longitudinal direction of the long axis.

10. The olivine-type positive electrode active material for a lithium secondary battery of claim 1, wherein the flake-shaped particles have a shape in which the length of the short diameter gradually decreases from a center of the long diameter toward both ends thereof.

11. A method for preparing an olivine-type positive electrode active material for a lithium secondary battery, comprising:

    preparing a first reaction solution by dissolving an iron raw material, a phosphorus raw material, and a doping raw material in water, preparing a second reaction solution by dissolving a lithium raw material in water, and preparing an organic solvent in which a dispersant is dissolved;

introducing the first reaction solution and the second reaction solution into a reactor containing the organic solvent dissolved with the dispersant, while stirring, to obtain an organic solution;

heating the reactor to maintain an internal temperature in a range from 160°C to 180°C, and performing a reaction under atmospheric pressure without sealing the reactor to obtain a precipitate; and

separating and drying the precipitate, followed by calcining under a reducing atmosphere to obtain an olivine-type positive electrode active material.

12. The method for preparing an olivine-type positive electrode active material for a lithium secondary battery of claim 11, wherein the step of heating the reactor to maintain an internal temperature in a range from 160°C to 180°C and performing a reaction under atmospheric pressure without sealing the reactor to obtain a precipitate is performed through a reflux process.

13. The method for preparing an olivine-type positive electrode active material for a lithium secondary battery of claim 11, wherein, in the step of preparing the organic solvent in which the dispersant is dissolved, the organic solvent has a boiling point in a range from 150°C to 200°C.

14. The method for preparing an olivine-type positive electrode active material for a lithium secondary battery of claim 11, wherein, in the step of preparing the organic solvent in which the dispersant is dissolved, the organic solvent comprises one or more selected from dimethyl sulfoxide (DMSO), diglyme, triglyme, and dimethylformamide (DMF).

15. The method for preparing an olivine-type positive electrode active material for a lithium secondary battery of claim 11, wherein, in the step of preparing the organic solvent in which the dispersant is dissolved, the dispersant comprises one or more selected from polyvinylpyrrolidone (PVP), polyvinylphenol (PVPh), polyvinyl alcohol (PVA), polyvinylsulfonic acid, polyvinyl sulfate metal salts, polyvinyl carboxylic acids, polyvinyl carboxylate metal salts, polyvinylpyridine (PVPy), copolymers thereof, cyclodextrin, dextran, polysaccharides, and polyacrylic acid (PAA).

16. The method for preparing an olivine-type positive electrode active material for a lithium secondary battery of claim 11, wherein the step of preparing the organic solvent in which the dispersant is dissolved comprises: stirring the organic solvent and the dispersant introduced into the reactor to dissolve the dispersant; and heating the organic solvent dissolved with the dispersant to a temperature in a range from 50°C to 80°C.

17. The method for preparing an olivine-type positive electrode active material for a lithium secondary battery of claim 16, wherein the step of heating the organic solvent dissolved with the dispersant to a temperature in a range from 50°C to 80°C is performed while continuously introducing an inert gas into the reactor.

18. The method for preparing an olivine-type positive electrode active material for a lithium secondary battery of claim 11, wherein, in the step of preparing the organic solvent in which the dispersant is dissolved, a mass percentage of the dispersant relative to the mass of the organic solvent is in a range from 0.2 wt% to 2 wt%.

19. The method for preparing an olivine-type positive electrode active material for a lithium secondary battery of claim 11, wherein, in the step of introducing the first reaction solution and the second reaction solution into the reactor containing the organic solvent dissolved with the dispersant while stirring to obtain the organic solution, a molar ratio value of lithium element to a total molar number of the iron element and the doping element in the obtained organic solution is in a range from 1.00 to 1.02.

20. The method for preparing an olivine-type positive electrode active material for a lithium secondary battery of claim 11, wherein the step of introducing the first reaction solution and the second reaction solution into the reactor containing the organic solvent dissolved with the dispersant while stirring to obtain the organic solution is performed by introducing the first reaction solution and the second reaction solution into the reactor at predetermined rates so that a pH value of the organic solution in the reactor is maintained constant.

21. The method for preparing an olivine-type positive electrode active material for a lithium secondary battery of claim 11, wherein the pH value of the organic solution in the reactor is in a range from 6.0 to 7.0.

22. The method for preparing an olivine-type positive electrode active material for a lithium secondary battery of claim 11, wherein the step of heating the reactor to a temperature in a range from 160°C to 180°C and performing a reflux reaction under atmospheric pressure without sealing the reactor to obtain a precipitate is performed for a period of 3 hours to 24 hours.

23. The method for preparing an olivine-type positive electrode active material for a lithium secondary battery of claim 11, wherein, in the step of separating and drying the precipitate and then calcining under a reducing atmosphere to obtain the olivine-type positive electrode active material, the method further comprises mixing and milling the dried precipitate with a carbon coating raw material to obtain a mixture, and performing calcination of the obtained mixture under the reducing atmosphere.

24. The method for preparing an olivine-type positive electrode active material for a lithium secondary battery of claim 23, wherein, in the step of mixing and milling the dried precipitate with the carbon coating raw material to obtain the mixture, a mass percentage of the carbon coating raw material relative to the mass of the dried precipitate is in a range from 5 wt% to 15 wt%.

25. The method for preparing an olivine-type positive electrode active material for a lithium secondary battery of claim 11, wherein the step of separating and drying the precipitate and then calcining under a reducing atmosphere to obtain the olivine-type positive electrode active material is performed by calcination at a temperature in a range from 400°C to 700°C for 1 hour or longer under the reducing atmosphere.

26. The method for preparing an olivine-type positive electrode active material for a lithium secondary battery of claim 11, wherein, in the step of preparing the first reaction solution by dissolving the iron raw material, the phosphorus raw material, and the doping raw material in water, the doping raw material comprises one or more selected from Mn, Co, Ni, Cu, Zn, Mg, Cr, V, Mo, Ti, Al, Nb, B, W, or Ga.

[Fig. 1]

(a)

200 nm

(b)

200 nm

(c)

200 nm

[Fig. 2]

[Fig. 3]

[Fig. 4]

[Fig. 5]

▽ $(Mn,Fe)_5H_2(PO_4)_4 \cdot 4H_2O$ main peak